# EUROPÄISCHE PATENTSCHRIFT

(11) **EP 0 334 159 B1**
(45) Veröffentlichungstag und Bekanntmachung des Hinweises auf die Patenterteilung: **21.07.1993**
(21) Anmeldenummer: 89104447.1
(22) Anmeldetag: 14.03.1989
(51) Int. Cl.: G01G 23/06, G01G 23/08

(54) **Lenkerwägezelle**
Linked loading cell
Cellule de charge avec guides

(30) Priorität: 19.03.1988 DE 8803728 U
(43) Veröffentlichungstag der Anmeldung: 27.09.1989
(73) Patentinhaber: Pfister GmbH, 86165 Augsburg (DE)
(72) Erfinder: Haefner, Hans Wilhelm, D-8890 Aichach (DE)
(74) Vertreter: Kahler, Kurt, Dipl.-Ing.

(56) Entgegenhaltungen:
- WO-A-82/04124
- DE-B- 1 236 811
- DE-U- 8 607 426
- US-A- 4 091 885

## Beschreibung

Die Erfindung betrifft eine Lenkerwägezelle gemäß dem Oberbegriff des Patentanspruchs 1.

Bekannt sind Lenkerwägezellen, bei denen eine das zu wiegende Gut aufnehmende Abstützung über zwei im wesentlichen horizontal übereinander verlaufende, zueinander parallele Doppellenker mit einem Gestell oder einer Halterung für eine Bewegung in vertikaler Richtung verbunden ist. Von der Halterung oder dem Gestell erstreckt sich in Richtung der Abstützung des Wiegegutes ein Kraftmeßelement, insbesondere in Form eines Dehnungsmeßstreifenelements, das beispielsweise über eine vertikal ausgerichtete Zugstange mit der Wiegegutabstützung verbunden ist. Zur Begrenzung der Vertikalbewegung nach oben oder unten sind Anschläge mit verstellbaren Schrauben vorgesehen. Bei der Belastung der Wägezelle treten starke Schwingungen auf, so daß eine Ablesung erst mit erheblicher Verzögerung vorgenommen werden kann. Eine plötzliche schwere Belastung führt ferner dazu, daß die Wägezelle häufig bis zu ihren Anschlägen ausgelenkt wird, was zu einem Verwinden oder Verbiegen der empfindlichen Elemente führen kann. Auch ist die Menge des zu wiegenden Gutes des öfteren kleiner als das Gewicht der Wiegegutabstützung oder eines damit verbundenen Behälters, so daß das Meßergebnis nur durch Differenzbildung erhalten werden kann, was zu erheblichen Meßungenauigkeiten führt.

Aus der US-A-4,091,885 ist eine Lenkerwägezelle gemäß dem Oberbegriff des Patentanspruches 1 bekannt, wobei eine das zu wiegende Gut aufnehmende Abstützung über zwei horizontale, parallelogrammartig angeordnete Lenker mit einem Gestell verbunden ist. An diesem sind über eine Feder ein Kraftmeßelement in Form von Dehnmeßstreifen angeordnet. An der Abstützung ist desweiteren eine Abkröpfung vorgesehen, die auf eine Dämpfungsvorrichtung wirkt, wenn sich die Abstützung in vertikaler Richtung bewegt. An dieser ist außerdem ein horizontal gerichteter Hebelarm angelenkt, an dessen entgegengesetztem Ende Ausgleichsgewichte zum Taraausgleich vorgesehen sind. Der Hebelarm ist hierbei an zwei Bändern, wovon eines auf das Kraftmeßelement wirkt, aufgehängt. Der Hebelarm erstreckt sich hierbei im wesentlichen in die gleiche Richtung wie der untere Lenkerarm und nimmt etwa dessen doppelte Länge ein, so daß sich eine relativ raumaufwendige Bauform ergibt. Zudem ist nachteilig, daß die Abstützung direkt auf das Dämpfungselement wirkt, so daß sich bei kleinen Belastungen nur geringe Dämpfungshübe und damit ein ungünstiges Einschwingverhalten ergibt. In dieser Druckschrift ist deshalb vorgesehen, den Durchlaßquerschnitt des hydraulischen Dämpfers zu verändern, um damit die Dämpfung an die jeweilige Belastung einzustellen. Eine derartige veränderbare Dämpfung ist jedoch relativ bauaufwendig.

Aus der DE-U-86 07 426 ist eine ähnliche Lenkerwägezelle bekannt, wobei sich ein Auslegerarm des Abstützrahmens der Waagschale auf einem Fluiddämpfer unmittelbar abstützt. Auch hierbei sind bei geringen Belastungen und dementsprechend kleinen Vertikalbewegungen der Abstützung nur geringe Dämpfungsraten zu erzielen.

Aus der WO82/04124 ist ebenfalls ein parallelogrammartiges Aufhängungssystem eines Wägebehälters bekannt, wobei unterhalb des Wägebehälters ein reibungsarmer Dämpfer vorgesehen ist. Hierbei sind ebenfalls bei geringen Belastungen nur geringe Dämpfungsraten erzielbar.

Aus der DE-B-12 36 811 ist desweiteren ein Hebelwerk mit zwei hintereinander geschalteten einarmigen Hebeln bekannt, wobei ein Hebel zur Filterung von Störschwingungen auf einem federnd nachgiebigen Lager abgestützt ist, das sich an einem Ende des Hebelarmes befindet. Zur räumlichen Festlegung ist hierbei ein weiteres ortsfestes Schneidenlager an einem nachgeschalteten Hebel erforderlich, so daß das Hebelwerk einen großen Platzbedarf aufweist und kompliziert aufgebaut ist. Über eine Anordnung an einer Lenkerwägezelle erfolgen hierbei keine Angaben.

Der Erfindung liegt die Aufgabe zugrunde, eine Lenkerwägezelle mit kompaktem Aufbau anzugeben, bei der ein genaues Ergebnis innerhalb kürzester Zeit erhalten werden kann.

Diese Aufgabe wird gemäß der Erfindung gelöst durch eine Lenkerwägezelle mit den Merkmalen des Anspruchs 1.

Bevorzugte Weiterbildungen der erfindungsgemäßen Wägezelle sind in den abhängigen Ansprüchen gekennzeichnet.

Weitere Merkmale und Vorteile der Erfindung ergeben sich aus der nachfolgenden Beschreibung anhand der Zeichnung. Es zeigen
- Fig. 1: eine Lenkerwägezelle in Seitenansicht, teilweise im Schnitt (nicht beansprucht),
- Fig. 2: eine Lenkerwägezelle eines Ausführungsbeispiels in Seitenansicht ähnlich derjenigen der Fig. 1 und
- Fig. 3: eine um 90° gedrehte Ansicht der Lenkerwägezelle nach Fig. 2.

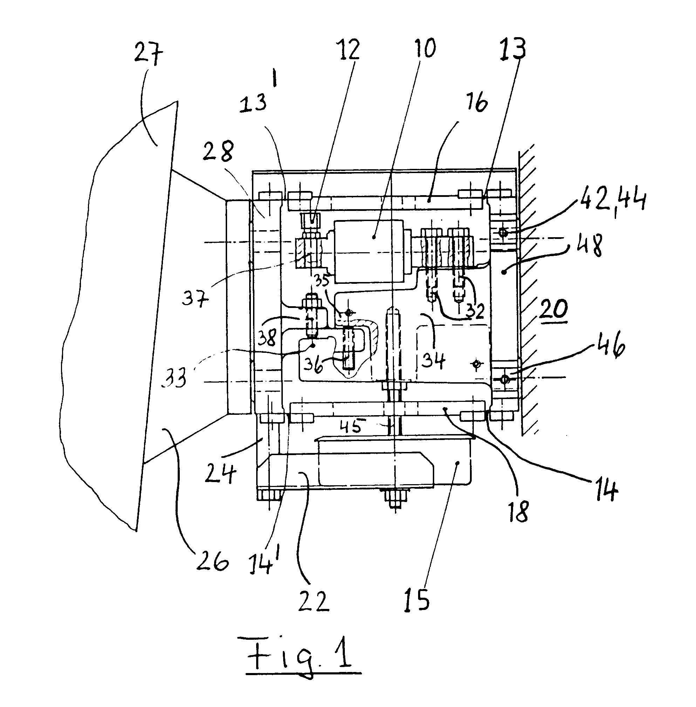

Fig. 1 zeigt eine Lenkerwägezelle mit angebautem Dämpfer.

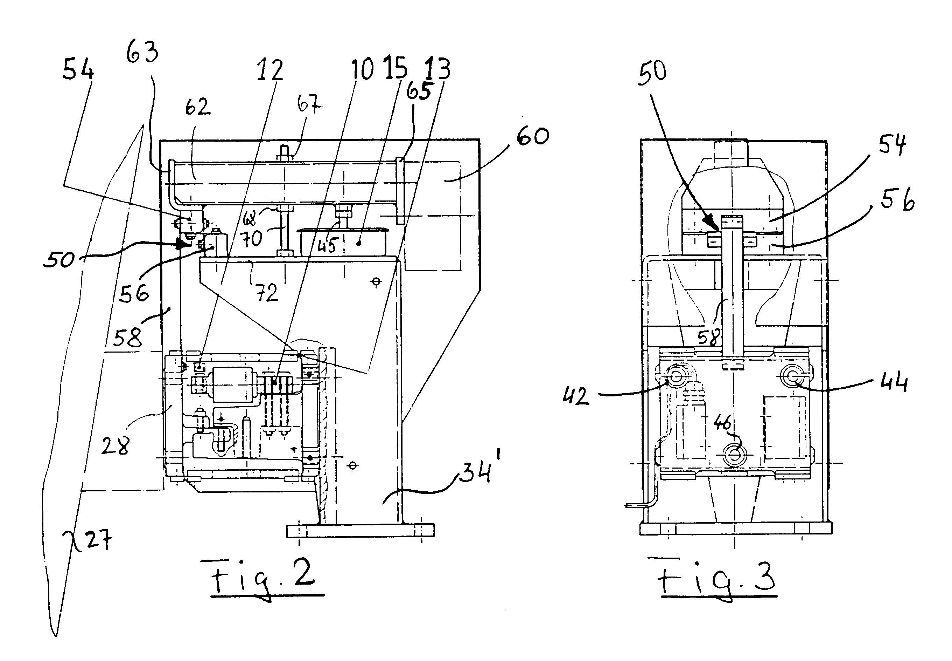

Beispielsweise ist an einer vertikalen Wand 20 über drei Befestigungselemente 42, 44, 46 eine Halterung (Gestell) 34 an drei Punkten befestigt, wobei die Befestigungselemente 42, 44 und 46 an den Ecken eines gleichseitigen Dreiecks angeordnet sein können (vgl. auch Fig. 3).

Die Halterung 34 besitzt einen rückwärtigen Rahmen bzw. eine Platte 48, die über Blattfedern 13 und 14 mit je einem Lenker 16 bzw. 18 verbunden ist, die sich parallel zueinander in horizontaler Richtung erstrecken. Die anderen Enden der Lenker 16, 18 sind wiederum über Blattfedern 13' bzw. 14' mit einem Rahmen oder einer Platte 28 verbunden, an dem bzw. der eine Abstützung 26 für einen Behälter 27 zur Aufnahme von Wiegegut befestigt, etwa angeschraubt ist. In einen sich in Richtung der Rückwand 48 erstreckenden Vorsprung 38 der Platte 28 ist in vertikaler Richtung eine Zugstange 12 eingeschraubt, die sich nach oben durch eine vertikal ausgerichtete Öffnung 37 in einem Kraftmeßelement 10 erstreckt. Dieses Kraftmeßelement 10 ist ein übliches Dehnungsmeßstreifenelement oder eine andere auf Biegung ansprechende Kraftmeßvorrichtung.

Das Kraftmeßelement 10 ist an seiner rückwärtigen Seite mittels Schrauben 32 an der Halterung 34 befestigt, so daß sich ein Biegebalken ergibt, der sich unter der Belastung der Zugstange 12 durch zu wiegendes Gut im Behälter 27 entsprechend durchbiegt, wodurch in bekannter Weise die Masse des zu wiegenden Gutes (zuzüglich der Masse des Behälters 27 und der Halterung 26 etc.) festgestellt werden kann.

Es sei bemerkt, daß die in bekannter Weise eine Vertikalbewegung des Rahmens 28 und der Zugstange 12 gewährleistenden Doppellenker 16, 18 beim Ausführungsbeispiel durch die Verbindungen der Blattfedern 13, 14 bzw. 13′, 14′ die notwendige Beweglichkeit erhalten. Beim Ausführungsbeispiel sind die Blattfedern eigene Elemente, die an den Rahmen 28 bzw. 48, etwa mittels Schrauben festgespannt sind. Andererseits besteht auch die Möglichkeit die beiden Rahmen und die Lenker einstückig auszuführen und die Positionen der Blattfedern als verdünnte elastische Stellen auszubilden.

Von besonderer Bedeutung ist die mit der Lenkerwägezelle verwendete Dämpfvorrichtung, die beim Ausführungsbeispiel ein angebauter Öldämpfer 15 ist. Dieser Öldämpfer 15 sitzt auf einer etwa horizontal verlaufenden Stütze 22, die über die Verlängerung 24 mit dem Rahmen 28 verbunden ist. In dem Öl des Dämpfers 15 taucht ein nicht gezeigter Kolben ein, der über eine Kolbenstange 45 mit der Halterung 34 verbunden, insbesondere einstellbar verschraubt ist. Die Kolbenstange 45 erstreckt sich durch eine nicht näher bezeichnete Öffnung im Lenker 18.

Bei Belastung des Behälters 27 mit zu wiegendem Gut bewegt sich der Rahmen 28 nach unten, wobei dem Dämpfer 15 die gleiche Bewegung erteilt wird und der Kolben in bekannter Weise diese Bewegung dämpft.

Es sei darauf hingewiesen, daß anstelle des hydraulischen Dämpfers auch ein pneumatischer Dämpfer, ein magnetischer Dämpfer oder ein Wirbelstromdämpfer in Frage kämen.

Es ist ferner noch darauf hinzuweisen, daß die Vertikalbewegung des Rahmens 28 einmal nach oben hin durch einen einstellbaren Schraubstift 36 dadurch begrenzt wird, daß dessen oberes Ende gegen eine Nase 35 der Halterung 34 anschlägt.

Andererseits ist eine Begrenzung der Vertikalbewegung des Rahmens 28 nach unten durch einen einstellbaren Schraubstift 38 gegeben, der bei einer zu großen Bewegung nach unten auf einem Ansatz 33 der Halterung 34 aufliegt.

Die Lenkerwägezelle ist somit besonders gut geschützt gegen unbeabsichtigte Vertikalbewegungen des Rahmens 28, wobei ein Anschlagen in der einen oder anderen Richtung durch den Öldämpfer 15 erheblich verringert wird. Dieser Öldämpfer 15 dämpft auch die Einschwingvorgänge bei der Belastung der Wägezelle erheblich, so daß eine Ablesung des Meßergebnisses bereits nach kurzer Zeit erfolgen kann.

Die Fig. 2 und 3 zeigen ein Ausführungsbeispiel der Erfindung, das gegenüber Fig. 1 weitergebildet ist. Die bereits im Zusammenhang mit der Fig. 1 beschriebenen Elemente werden deshalb nicht mehr näher erläutert und sind mit den gleichen Bezugszeichen versehen.

Gegenüber Fig. 1 sind beim Ausführungsbeispiel zusätzliche Maßnahmen für einen einfachen Taraausgleich getroffen. Auch ist der Aufbau unter Vereinfachung der Verbindungen und Elemente äußerst kompakt gewählt.

In Abwandlung zu Fig. 1 ist die Halterung 34′ als Ständer ausgebildet, wobei jedoch die Wägezellenanordnung wiederum seitlich wie in Fig. 1 angesetzt ist.

Beim vorliegenden Ausführungsbeispiel erstreckt sich vom Rahmen bzw. der Platte 28 ein Stahlband oder -draht 58 senkrecht nach oben zu einem allgemein mit 50 bezeichneten Kreuzbandgelenk (vgl. auch Fig. 3) mit sich diagonal gegenüberliegenden Balken 54 und 56, wobei letzterer auf einer horizontal verlaufenden Platte 72 des Ständers 34' aufgesetzt ist, während der Balken 54 an der Unterseite eines senkrecht zur Zeichnungsebene verlaufenden Winkels 63 befestigt ist. An diesem Winkel 63 ist ein in horizontaler Richtung senkrecht von ihm abgehendes Rohr 62 angeschweißt, das sich in horizontaler Richtung im wesentlichen über die ganze Breite des Ständers 34' erstreckt. An einer rückwärtigen Platte 65 lassen sich unterschiedliche Ausgleichsgewichte 60, etwa in Form von Scheiben oder dergleichen aufsetzen, beispielsweise anschrauben.

Der Öldämpfer 15 ist bei diesem Ausführungsbeispiel auf der Platte 72 angebracht und seine Kolbenstange 45 ist mit der Unterseite des Rohres 62 verbunden, so daß sie dessen Schwenkbewegung um das Kreuzbandgelenk 50 mitmacht.

Eine Gewindestange 70 ist auf der Platte 72 aufgesetzt und verläuft durch das Vierkantrohr 62, an dem es mittels selbsthemmender Muttern 67, 68 für einen Transport gesichert werden kann. Im Einsatz lassen sich die Muttern 67, 68 derart einstellen, daß wiederum ein Überlastungsanschlag oben und unten in einfacher Weise gegeben ist.

Es sei bemerkt, daß an die Stelle des Kreuzbandgelenks auch eine andere möglichst reibungsfreie Abstützung treten kann, wie es in der Wägetechnik bekannt ist.

Bei der Erfindung ist zu beachten, daß sich auf Grund des langen Hebelarmes vom Kreuzbandgelenk 50 zu den Ausgleichsgewichten 60 bereits mit geringen Gewichten die Vorlast des Behälters 27 und dessen Verbinden zur Wägezelle ausgleichen läßt. Auch der Öldämpfer 15 wird über einen entsprechenden Hebelarm beaufschlagt.

Insgesamt ergibt sich somit eine äußerst vorteilhafte Lenkerwägezelle mit hervorragendem Einschwingverhalten und einer hohen Meßgenauigkeit auf Grund des Taraausgleichs.

## Patentansprüche

1. Lenkerwägezelle, bei der eine das zu wiegende Gut aufnehmende Abstützung (26) über zwei im wesentlichen horizontal in Abstand übereinander parallel verlaufende Lenker (16, 18) mit einem Gestell (34) für eine Bewegung in vertikaler Richtung zu diesem verbunden ist und zwischen dem Gestell (34) und der Abstützung (26) ein auf Biegung oder Drehung ansprechendes Kraftmeßelement (10) eingefügt ist, wobei zwischen dem Gestell (34) und der Abstützung (26) des Wiegegutes eine die relative vertikale Bewegung dämpfende Dämpfungsvorrichtung (15) sowie eine Taraausgleichsvorrichtung (60, 62, 63, 65) vorgesehen ist, die einerseits mit der Abstützung (26) für das Wiegegut und andererseits mit einem Hebel (62) verbunden ist, an dem Ausgleichsgewichte (60) anbringbar sind, dadurch gekennzeichnet, daß der Hebel (62) an einem reibungsarmen Schwenklager (50) gelagert ist und auch auf die Dämpfungsvorrichtung (15) wirkt, die ortsfest in größerer Entfernung vom Lagerpunkt des Schwenklagers (50) auf dem Gestell (34) angebracht ist.

2. Wägezelle nach Anspruch 1, dadurch gekennzeichnet, daß die Dämpfungsvorrichtung (15) ein Öldämpfer ist.

3. Wägezelle nach Anspruch 1 oder 2, dadurch gekennzeichnet, daß das Schwenklager ein Kreuzbandlager (50) ist, dessen eine Seite über ein Stahlband bzw. einen Stahldraht (58) mit der Abstützung (26) für das Wiegegut in Verbindung steht, während die andere Lagerseite ortsfest auf dem Gestell (34) angebracht ist.

4. Wägezelle nach einem der Ansprüche 1 bis 3, dadurch gekennzeichnet, daß eine Schwenkbewegung des Hebels (62) um den Lagerpunkt des Schwenklagers (50) durch eine Transportsicherung (67, 68, 70) verhinderbar ist.

## Claims

1. Linked loading cell in which a support (26) loaded by the material to be weighed is linked to a base (34) via two essentially horizontal links (16, 18) orientated above each other with distance and in parallel for a movement in vertical direction as to the latter, and a force measuring element (10) responsive to bending or torsion is inserted between the base (34) and the support (26) wherein a damping device (15) damping the relative vertical movement is provided between the base (34) and the support (26) of the material to be weighed and wherein a tare-compensation device (60, 62, 63, 65) is provided which is connected, on the one hand, to the support (26) of the material to be weighed and, on the other hand, to a lever (62) to which counterbalance weights (60) may be attached,
characterized in that
the lever (62) is supported by a low-friction pivot bearing (50) and acts also on the damping device (15) which is stationary arranged on the base (34) at a greater distance from the bearing point of the pivot bearing (50).

2. Loading cell according to claim 1, characterized in that the damping device (15) is an oil damper.

3. Loading cell according to claim 1 or 2, characterized in that the pivot bearing is a cross-link flexure bearing (50), one end thereof being in connection to the support (26) of the material to be weighed via a steel band or a steel wire (58), respectively, whereas the other bearing end thereof is stationary arranged on the base (34).

4. Loading cell according to any of the claims 1 to 3, characterized in that a pivoting movement of the lever (62) around the bearing point of the pivot bearing (50) is blockable by a transport securing device (67, 68, 70).

## Revendications

1. Cellule de pesage à biellettes oscillantes, dans laquelle un élément de soutien (26) recevant la matière à peser est relié, par l'intermédiaire de deux biellettes oscillantes (16, 18) s'étendant en substance horizontalement, parallèlement à distance l'une au-dessus de l'autre, à un bâti (34) en vue d'accomplir un mouvement dans le sens vertical par rapport à ce dernier, et un élément (10) mesureur de forces, réagissant à la flexion ou à la rotation, est interposé entre le bâti (34) et l'élément de soutien (26), cellule dans laquelle sont prévus, entre le bâti (34) et l'élément (26) de soutien de la matière à peser, un dispositif d'amortissement (15) amortissant le mouvement vertical relatif, ainsi qu'un dispositif (60, 62, 63, 65) de compensation de la tare qui est relié, d'une part, à l'élément (26) de soutien de la matière à peser et, d'autre part, à un levier (62) sur lequel des contrepoids d'équilibrage (60) peuvent être mis en place, caractérisée par le fait que le levier (62) est monté sur un palier de pivotement (50) à faible frottement, et agit également sur le dispositif d'amortissement (15) qui occupe une position fixe sur le bâti (34), avec éloignement supérieur par rapport au point de portée du palier de pivotement (50).

2. Cellule de pesage selon la revendication 1, caractérisée par le fait que le dispositif d'amortissement (15) est un amortisseur à huile.

3. Cellule de pesage selon la revendication 1 ou 2, caractérisée par le fait que le palier de pivotement est un palier (50) à croisillon dont l'un des cotés est relié, respectivement par l'intermédiaire d'un ruban en acier ou d'un câble (58) en acier, à l'élément (26) de soutien de la matière à peser, tandis que l'autre côté du palier est implanté de manière fixe sur le bâti (34).

4. Cellule de pesage selon l'une des revendications 1 à 3, caractérisée par le fait qu'un pivotement du levier (62), autour du point de portée du palier de pivotement (50), peut être empêché par l'intermédiaire d'un arrêt (67, 68, 70) prévu pour le transport.
